# EUROPEAN PATENT APPLICATION

(11) **EP 1 066 750 A1**
(43) Date of publication of application: **10.01.2001**
(21) Application number: 99202259.0
(22) Date of filing: 09.07.1999
(51) Int. Cl.: A01G 9/12

(54) **Plant pot with stake holder**

(71) Applicant: O'Brien, Peter, Blyth, Northumberland NE24 3RH (GB); Cornell, Revell, Blyth, Northumerland NE24 3RH (GB)
(72) Inventor: O'Brien, Peter, Blyth, Northumberland NE24 3RH (GB); Cornell, Revell, Blyth, Northumerland NE24 3RH (GB)

(57) **Abstract**

A plant pot which has a hollow funnel stake projecting from the base, and part of, and on the inside of, said plant pot, as an integral part of the plant pot. Plant support stakes are supported inside the funnelled stake support.

## Description

This invention relates to a plant pot with integral stake support funnel.

Plant pots are well known containers for the growing and displaying of flora and fauna. As flowers, plants, and shrubs grow in stature in said plant pots, stakes are inserted into the growing compound contained within plant pots. The stake is used as a support for the growing plant.

Stakes inserted into growing compound can damage roots of the plant or flower growing in said compound. Stakes also rot over a period of time due to the damp environment into which they are embedded.

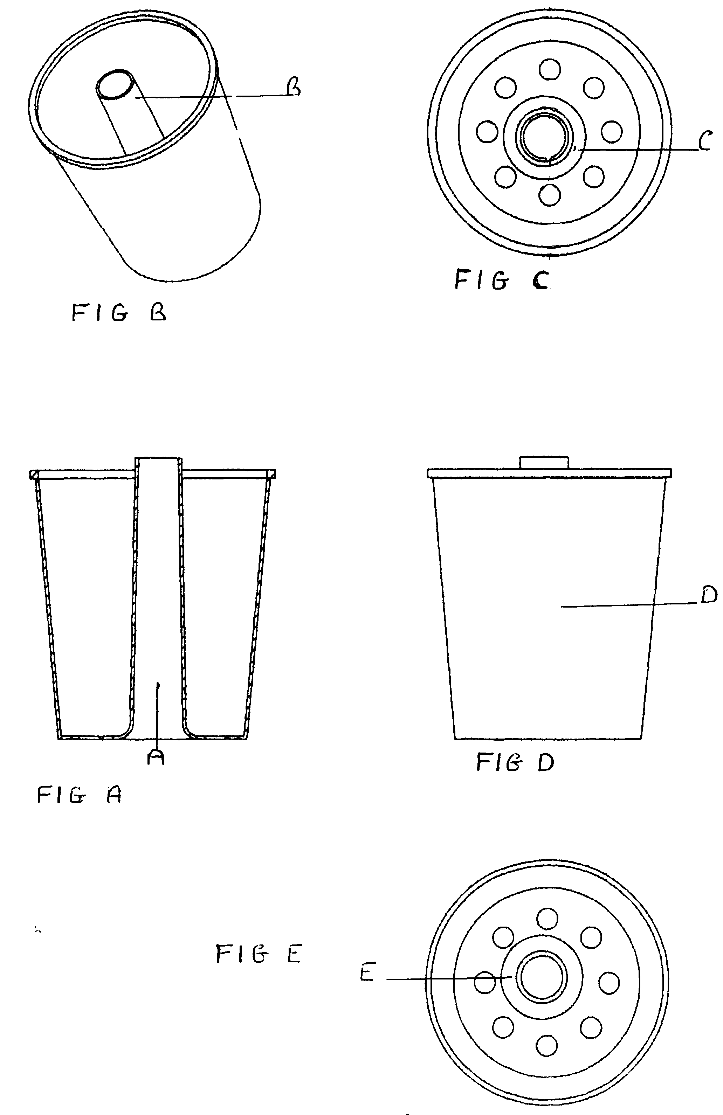

A specific embodiment of the invention will now be described by way of example with reference to the accompanying drawing:-
Drawing shows sectional view of the plant pot, with the funnelled stake support in view.
Drawing shows a plan view of plant pot with the funnelled stake support shown from above.

Referring to the drawing the plant pot shows the internal stake support. Stakes may be placed in the internal support without damage to roots and be separate from the damp environment of the growing compound.

Stakes may be removed without being drawn through the roots. Stakes may be used again. Stakes used are proportional to the pot and the intended height of any plant growing in said pot; therefore stakes will be solidly supported within the internal support. As the plant grows, whether it is necessary or not to re-pot a plant, a stake may be changed for a longer stake, or the plant may be transplanted to a larger pot with an internal support, and stakes may be used in the same manner in a larger pot.

### STAKE POT

- FIG A: A CROSS SECTIONAL VIEW OF PLANT POT SHOWING THE TUBE TO SUPPORT THE STAKE
- FIG B: A PERSPECTIVE VIEW PARTIALLY BROKEN AWAY ILLUSTRATING THE SUPPORT FOR THE STAKE
- FIG C: VIEW LOOKING DOWN FROM THE TOP OF THE PLANT POT SHOWING THE SLIGHT TAPPER OF THE TUBE
- FIG D: A SIDE VIEW OF THE EXTERNAL PLANT POT
- FIG E: A VIEW OF THE PLANT POT SHOWING THE STAKE TUBE SET OFF CENTRE

## Claims

1. A plant pot with integral hollow funnelled support projecting vertically from the base of, and within, and part of, said plant pot, to allow the inserting of plant stake supports.
